(19) **Europäisches Patentamt / European Patent Office / Office européen des brevets**

(11) **EP 1 729 352 B1**

(12) **FASCICULE DE BREVET EUROPEEN**

(45) Date de publication et mention
de la délivrance du brevet:
**08.07.2009 Bulletin 2009/28**

(51) Int Cl.:
***H01L 41/09*** *(2006.01)*

(21) Numéro de dépôt: **06113896.2**

(22) Date de dépôt: **12.05.2006**

(54) **Perfectionnement aux matériaux des actionneurs à piston actif**

Verbesserung bezüglich der Materialien eines Aktors mit aktivem Kolben

Improvement of materials of an actuator with active piston

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **01.06.2005 FR 0505554**

(43) Date de publication de la demande:
**06.12.2006 Bulletin 2006/49**

(73) Titulaire: **Sagem Défense Sécurité
75015 Paris (FR)**

(72) Inventeurs:
• **D'Almeida, Oscar
92100 Boulogne Billancourt (FR)**
• **Woydt, Mathias
D - 12203 Berlin (DE)**
• **Audren, Jean-Thierry
78470 Saint Rémy lès Chevreuses (FR)**

(74) Mandataire: **Callon de Lamarck, Jean-Robert et al
Cabinet Regimbeau
20 rue de Chazelles
75847 Paris cedex 17 (FR)**

(56) Documents cités:
**EP-A- 1 348 730          FR-A- 2 790 618
FR-A- 2 819 468          US-A1- 2001 021 292
US-B1- 6 313 568**

• **WANG KAI ET AL: "Mode Grüneisen parameters and negative thermal expansion of cubic ZrW2O8 and ZrMo2O8" APPLIED PHYSICS LETTERS, AIP, AMERICAN INSTITUTE OF PHYSICS, MELVILLE, NY, US, vol. 76, no. 16, 17 avril 2000 (2000-04-17), pages 2203-2204, XP012025068 ISSN: 0003-6951**
• **CORA LIND ET AL: 'Synthesis and Properties of the Negative Thermal Expansion Material Cubic ZrMo2O8' CHEMISTRY OF MATERIALS vol. 10, 1998, pages 2335 - 2337**
• **MARY T.A. ET AL: 'Negative Thermal Expansion from 0.3 to 1050 Kelvin in ZrW2O8' SCIENCE vol. 272, 05 Avril 1996, pages 90 - 96, XP000993295**

EP 1 729 352 B1

**Description**

L'invention concerne les actionneurs à piston actif et notamment à piston en matériau piézo-électrique.

De tels actionneurs trouvent avantageusement applications pour les dispositifs de freinage ou les embrayages, notamment pour les véhicules automobiles ou les aéronefs.

Un actionneur à piston en matériau piézo-électrique a déjà été décrit dans FR 2 800 028.

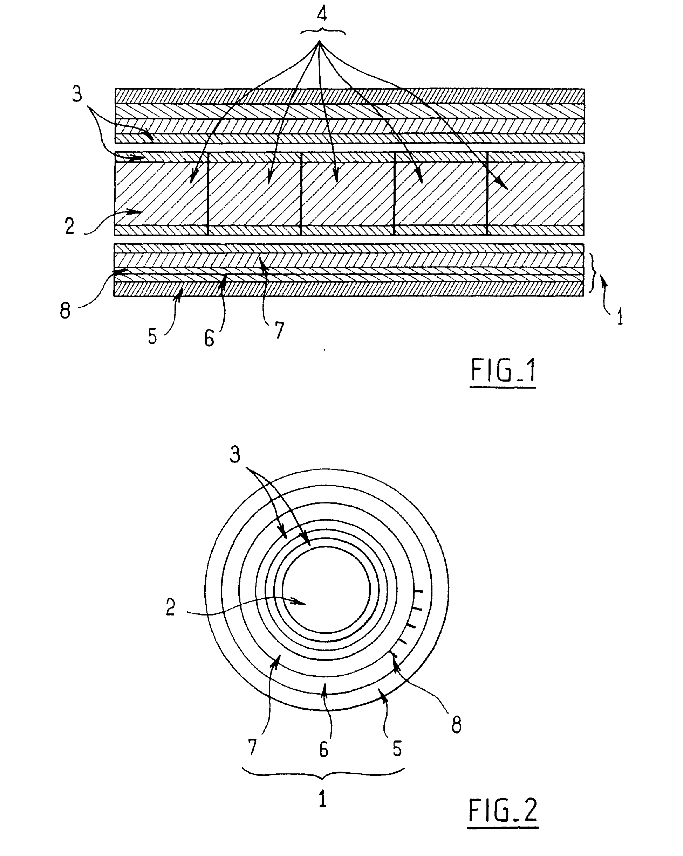

Un tel actionneur comporte ainsi qu'illustré sur la figure 1 un cylindre ou une chemise de coulissement 1 et un piston 2 apte à coulisser axialement dans ledit cylindre 1.

Le cylindre 1 est constitué de plusieurs cylindres emboîtés coaxialement les uns dans les autres: un cylindre extérieur 5, un cylindre intérieur 7 et un cylindre intermédiaire 6 qui s'étend entre le cylindre intérieur 7 et le cylindre extérieur 5, le piston 2 coulissant dans le cylindre intérieur 7.

Le cylindre 5 précontraint, en les serrant, le cylindre 7 et le cylindre intermédiaire 6. Ce cylindre intermédiaire 6 comporte des fentes radiales 8, représentées sur la figure 2, qui s'étendent à partir de génératrices du cylindre intérieur 7.

Le piston 2 est constitué d'une pluralité de tronçons de céramiques piézo-électriques 4. Chaque tronçon est pourvu d'électrodes (non représentées sur les figures 1 et 2) qui permettent de le commander indépendamment des autres. Chaque tronçon peut être en céramique multicouches ou en céramique massive.

Ces électrodes permettent de commander lesdits tronçons pour soit les dilater transversalement pour qu'ils se bloquent par frottement sur le cylindre 7, soit les allonger, les tronçons étant actionnés selon des séquences de fonctionnement alternant blocage et allongement de façon, soit à déplacer le piston, soit, lorsque celui-ci est en butée, à engendrer une force, qui est par exemple utilisée comme force de freinage.

Des couches formant couples de friction sont prévues sur les faces du piston 2 et du cylindre 7 pour assurer un frottement optimisé.

L'élongation électrique d'un élément piézo-électrique monocristal est de l'ordre de 1.4%. Celle d'un élément multicouche est égale à 0.1%. Par exemple, pour un élément de 25 mm, l'élongation électrique résultante pour un élément multicouche est de 9 $\mu$m environ. Cependant, la fabrication des éléments multicouches est beaucoup moins onéreuse et leur actionnement permet l'utilisation de tensions beaucoup moins élevées. Avec une fréquence de commande jusqu'à un ordre de grandeur de 40 kHz, on peut atteindre les mêmes vitesses de déplacement de piston qu'avec un actionneur hydraulique.

Mais à cause de l'élongation très faible des éléments piézo-électriques, le contrôle du jeu entre la chemise de coulissement et le piston actif en matériau piézo-électrique est primordial. En effet, la force de blocage du piston 2 dans le cylindre 1 dépend principalement de quatre facteurs :

- le coefficient de frottement entre les deux pièces 1 et 2 recouvertes des couples de friction 3 ;
- la dilatation électrique du matériau piézo-électrique du piston 2 ;
- l'augmentation du jeu entre le cylindre 1 et le piston 2 due à l'usure de ces deux pièces ;
- les variations de la valeur du jeu entre le cylindre 1 et le piston 2 en fonction de la température du système.

Le dernier facteur montre que la maîtrise du jeu dans la fourchette de températures des applications de tels actionneurs, allant de -40°C (- 60°C pour les aéronefs) à 200°C ou 300°C voire plus, représente un enjeu important. Cette maîtrise détermine les caractéristiques fonctionnelles ainsi que le prix de l'actionneur.

Le matériau constitutif du piston actif a un coefficient de dilatation thermique qui possède une valeur atypique. Par conséquent, on doit pouvoir concevoir, avec des matériaux classiques, une pièce mécanique qui possède un coefficient de dilatation thermique compatible avec celui du matériau actif.

L'actionneur selon le document FR 2 800 028 propose de contrôler la valeur de ce jeu en fonction de la variation de la température en tirant parti des différentes valeurs des coefficients de dilatation des cylindres 5, 6 et 7.

A cet effet, le ou les matériaux des cylindres 5 et 7 sont choisis avec des coefficients de dilatation faibles, mais néanmoins algébriquement supérieurs à celui du piston 2. Le matériau du cylindre intermédiaire 6 est choisi avec un coefficient de dilatation supérieur aux coefficients des pièces 5 et 7.

Lorsque la température augmente, le piston actif se contracte légèrement. Le jeu entre la chemise et le piston augmente. Pour compenser cette augmentation, le cylindre 6 se dilate radialement, mais il est partiellement empêché par le cylindre 5 qui se dilate moins que lui. En conséquence, l'expansion extérieure interdite est reportée sur le cylindre 7 qui se trouve radialement comprimé.

Les fentes 8 de dilatation empêchent la formation de contraintes orthoradiales, qui empêcheraient toute expansion du cylindre 5 vers l'intérieur et la compression du cylindre 7.

On ajuste le coefficient de dilatation interne du cylindre 7 en jouant sur l'épaisseur du cylindre 5. Le contrôle du jeu entre le cylindre 1 et le piston actif 2 en fonction de la température est donc effectué par le choix des épaisseurs relatives des différents cylindres 5, 6 et 7.

Ces actionneurs présentent cependant des inconvénients. Leur conception, c'est-à-dire la détermination des différentes épaisseurs relatives, est difficile. En effet, le cylindre 1 est composé de trois cylindres, dont les épaisseurs sont autant de paramètres à prendre en compte dans la conception. De plus, leur fabrication est onéreuse et compliquée puisque aucun lubrifiant solide aux interfaces entre les cylindres ne facilite leurs glissements relatifs dus à la dilatation thermique et pour leur montage notamment.

FR 2 819 468 propose un actionneur dont le contrôle du jeu entre la chemise et le piston en fonction de la température est simplifié. FR 2 819 468 propose un actionneur comportant un cylindre fait d'un matériau cristallin avec une dilatation thermique négative. Ainsi, l'actionneur de FR 2 819 468 comporte un cylindre extérieur dans lequel le cylindre de coulissement est précontraint, l'un ou l'autre du cylindre extérieur et du cylindre de coulissement étant en matériau ayant un coefficient de dilatation thermique négatif ou sensiblement nul, l'autre cylindre ayant un coefficient de dilatation thermique positif.

Les matériaux cristallins présentés dans FR 2819 468 pour un des cylindres possèdent un coefficient de dilatation thermique isotrope négatif ou proche de zéro. Ils sont choisis parmi un des matériaux suivants :

a. $ZrW_2O_8$, en phase $\alpha$ et/ou $\beta$,
b. $HfW_2O_8$,
c. $ZrV_2O_7$,
d. $YAlW_3O_{12}$,
e. $ZrP_{2-x}V_xO_7$, avec $0 \leq x \leq 2$ ; et
f. $Sc_2(WO_4)_3$.

Ces actionneurs présentent cependant des inconvénients également, car ils sont limités dans leur domaine d'utilisation en pression et en température.

En effet, dans tous les cas d'utilisation de l'actionneur, les tensions hydrostatiques (ou mécaniques, selon le critère de von Mises, créées par les précontraintes des tubes) sur les matériaux à coefficient de dilatation négatif ne doivent pas excéder 200 MPa (soit 2.000 bar). Cette limitation en pression pour ces matériaux permet que la phase du matériau soit stable et ainsi évite une transition de phase. La transition de phase annulerait les propriétés de dilatation thermiques des matériaux. Or, en sollicitation mécanique dans un dispositif de freinage ou d'embrayage, 200 MPa sont vite atteints.

De plus, les températures d'utilisation sont également limitées pour également éviter une transition de phase des matériaux utilisés. Le tableau 1 regroupe les caractéristiques en températures et en pressions de différents matériaux prévus dans FR 2 819 468.

La montée en température au-dessus des températures de stabilité de la dilatation thermique négative présentées dans le tableau 1 ne peut être négligée dans une application de freinage ou d'embrayage.

Les actionneurs de FR 2 819 468 ont donc des domaines de températures et de pressions d'utilisation limités, parfois incompatibles avec des utilisations dans des actionneurs de dispositif de freinage ou d'embrayage.

Le tableau 1

| Phases | Coefficient de dilatation $\alpha$ [ppm/K] | Domaine thermique de stabilité de la dilatation [°C] |
|---|---|---|
| $\alpha$-$ZrW_2O_8$ | -8,8 | de -273 à +155 |
| $\beta$-$ZrW_2O_8$ | -4,9 | de +155 à +780 (décomposition) |
| $YAlW_3O_{12}$ | -5/-7 | <+1100 |
| $ZrV_2O_7$ | 0 | de +150 à +700 |
| $ZrP_{2-x}V_xO_7$ | -6/-11,5 | <+100 |
| $Sc_2(WO_4)_3$ | -2,2 | de +263 à +520 |

De plus, en vue du dimensionnement des pièces (et notamment leur épaisseur radiale), une grande valeur absolue du coefficient de dilatation thermique négative est aussi importante qu'une stabilité thermique de la dilatation négative. Les matériaux de FR 2 819 468 ne présentent parfois pas de coefficient de dilatation thermique négative ayant une valeur absolue assez grande.

Par ailleurs, un autre élément de FR 2 819 468 est l'utilisation d'un lubrifiant solide pour assurer le glissement axial entre deux cylindres composant l'actionneur, un cylindre présentant en utilisation une dilatation thermique négative et l'autre cylindre présentant une dilatation thermique positive.

Les lubrifiants solides présentés dans FR 2 819 468 sont choisis parmi :

- le nitrure de bore hexagonal,
- le $MoS_2$,
- le $WSe_2$,
- le $WS_2$,
- le graphite intercalé avec des substances connues de l'homme de métier,
- le graphite non intercalé,
- le sulfure d'étain (sous ses formes $SnS$, $SnS_2$, $Sn_3S_4$), et
- le fluorure de Cerium ($CeF_3$), ou
- un quelconque mélange de ces matériaux.

Dans une application de freinage ou d'embrayage, il s'avère qu'en vue de longues garanties de l'équipement avionique et/ou automobile, l'action de l'eau, de l'humidité et de la vapeur contre les lubrifiants solides devient un nouveau critère à prendre en compte. Or les chalcogénides présentés dans FR 2 819 468, notamment les sulfures et les sélénides, réagissent avec l'eau et perdent leur caractère lubrifiant intrinsèque, ce qui limite l'utilisation de l'actionneur.

PRESENTATION DE L'INVENTION

Un but de l'invention est de proposer un actionneur résolvant au moins un des inconvénients précités.

A cet effet, l'invention propose un actionneur comportant un cylindre intérieur de coulissement et un cylindre extérieur dans lequel ledit cylindre de coulissement est précontraint, l'un ou l'autre du cylindre extérieur et du cylindre de coulissement étant en matériau ayant un coefficient de dilatation thermique négatif ou sensiblement nul, l'autre cylindre ayant un coefficient de dilatation thermique positif ou sensiblement nul, l'actionneur comportant en outre un piston linéaire en matériau actif comportant une pluralité de tronçons aptes à être commandés pour être dilatés de façon à se bloquer dans le cylindre de coulissement et/ou pour être allongés à l'intérieur du cylindre de coulissement de façon à ce que le piston se déplace en frottement à sec axialement dans le cylindre de coulissement, caractérisé en ce que le matériau du cylindre ayant un coefficient de dilatation thermique négatif ou sensiblement nul est un des matériaux suivants :

- le $Zr_2WP_2O_{12}$,
- une faujasite silicieuse,
- le $Lu_2(WO_4)_3$,
- le $ZrW_2O_8$ en phase cubique comportant des nanograins dont la taille est sensiblement comprise entre 10 nm et 75 nm, ou
- une quelconque combinaison possible de ces matériaux, de sorte que les contraintes sur ledit matériau puissent atteindre 600 MPa environ.

L'invention est avantageusement complétée par les caractéristiques suivantes, prises seules ou selon leurs combinaisons possibles :

- le cylindre en un matériau à coefficient de dilatation thermique négatif ou sensiblement nul est le cylindre extérieur, le cylindre de coulissement étant en un matériau à coefficient de dilatation positif ;
- au moins une couche de lubrifiant solide à l'interface entre le cylindre extérieur et le cylindre de coulissement;
- le lubrifiant solide est du fluorure de graphite $(CF_x)_n$, où x est un nombre réel qui représente le degré de fluoruration et n un nombre entier qui représente le degré de polymérisation ;
- x est compris entre 0,8-1,2, préférentiellement compris entre 1.0 et 1.1 ;
- le lubrifiant solide est :

  - le nitrure de bore hexagonal,
  - le $MoS_2$,
  - le $WSe_2$,
  - le $WS_2$,
  - le graphite intercalé ou non intercalé,
  - le sulfure d'étain (sous ses formes $SnS$, $SnS_2$, $Sn_3S_4$), et
  - le fluorure de Cerium ($CeF_3$), ou
  - un quelconque mélange de ces matériaux.

- le cylindre extérieur comporte des excroissances externes s'étendant radialement audit cylindre ;
- l'un des deux cylindres comporte une ou plusieurs fentes, s'étendant radialement et longitudinalement dans le cylindre ;

- les tronçons successifs en matériau actif piézo-électrique sont aptes à être déformés indépendamment les uns des autres par des moyens de commande pour se raccourcir sur eux-mêmes de façon à se bloquer par rapport au cylindre de coulissement ou pour s'allonger de façon à se libérer par rapport à celui-ci.

L'invention présente de nombreux avantages.

Notamment, l'actionneur présente de meilleures performances et une durée de vie augmentée du fait des coefficients de dilation négatifs plus importants et de la stabilité du caractère lubrificateur intrinsèque du lubrifiant solide sur des plages de températures plus grandes et des conditions d'utilisation plus humides (eau ou vapeur).

L'actionneur peut être utilisé sur des gammes de températures et de pressions plus larges et plus élevées, pendant plus de temps.

## PRESENTATION DES FIGURES

D'autres caractéristiques et avantages de l'invention ressortiront de la description qui suit, qui est purement illustrative et non limitative. Elle doit être lue en regard des dessins annexés sur lesquels :

- la figure 1, déjà commentée, est une coupe longitudinale d'un mode de réalisation de l'actionneur selon FR 2 800 028 ;
- la figure 2, déjà commentée, est une coupe transverse d'un mode de réalisation de l'actionneur selon FR 2 800 028 ;
- la figure 3 est une coupe transverse d'un premier mode de réalisation préféré de l'actionneur selon l'invention ;
- la figure 4 est une coupe longitudinale d'un premier mode de réalisation préféré selon l'invention ;
- la figure 5 est une coupe transversale d'une variante d'un premier mode de réalisation de l'actionneur selon l'invention ;
- la figure 6 est une représentation en coupe transversale d'un deuxième mode de réalisation préféré de l'actionneur selon l'invention ;
- la figure 7 est une vue longitudinale comportant une partie en coupe d'un deuxième mode de réalisation préféré de l'actionneur selon l'invention ;
- la figure 8 est une représentation d'une coupe transverse d'un troisième mode de réalisation de l'actionneur selon l'invention ;
- la figure 9 est une coupe longitudinale d'un troisième mode de réalisation de l'actionneur selon l'invention.

La structure générale des actionneurs selon l'invention est similaire à celle de l'actionneur selon le document FR 2 800 028. On décrit ci-dessous trois modes de réalisations préférés.

## PREMIER EXEMPLE DE REALISATION

## DESCRIPTION

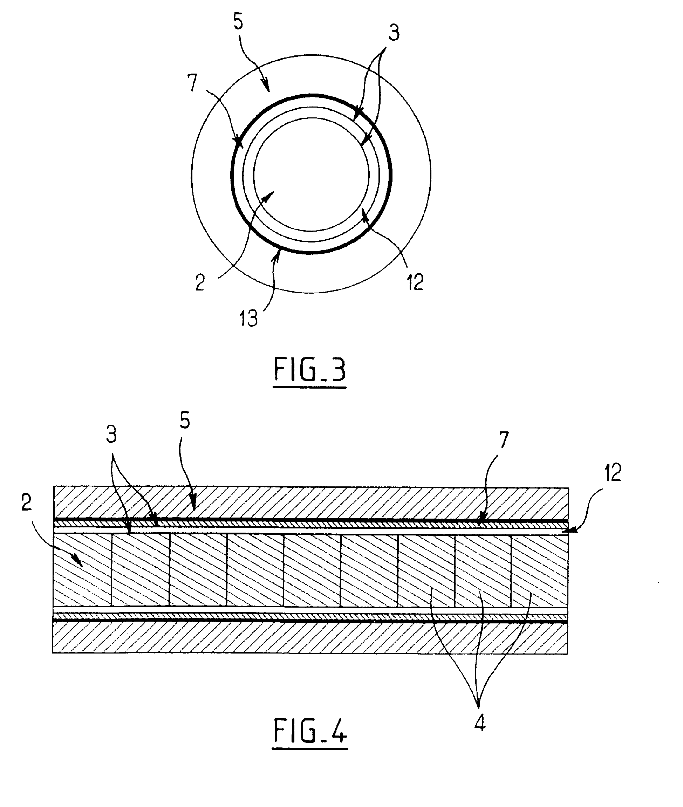

L'actionneur qui est représenté sur les figures 3 et 4 comporte un cylindre extérieur 5, dont le matériau a un coefficient de dilatation thermique positif et un piston actif 2 en matériau piézo-électrique coulissant dans un cylindre intérieur 7 de coulissement. Le cylindre 7 est inséré en force dans le cylindre 5. Il subit par conséquent une précontrainte, qui le maintient solidement dans son cylindre de support 5.

Le diamètre intérieur du cylindre 7 est par exemple égal à 25 mm, le diamètre extérieur du cylindre 5 est par exemple égal à 60 mm. La longueur des cylindres 5 et 7 est égale à la course du piston que l'utilisateur désire obtenir augmentée de la longueur du piston.

Le coefficient de dilatation thermique du piston actif est négatif et faible. Il est de l'ordre de -2ppm/K. La longueur du piston actif 2 est par exemple égale à 50 mm.

Le cylindre intérieur 7 est en un matériau ayant un coefficient de dilatation thermique négatif. On connaît les matériaux qui ont des coefficients de dilatation thermique faibles ou négatifs (entre -8ppm/K et ≈0ppm/K) par les documents US 5 514 360 et US 5 919 720 par exemple.

Les matériaux à dilatation négative du cylindre 7 sont préférentiellement choisis parmi :

- le $Zr_2WP_2O_{12}$,
- une faujasite silicieuse,
- le $Lu_2(WO_4)_3$,
- le $ZrW_2O_8$ en phase cubique comportant des nanograins dont la taille est sensiblement comprise entre 10 nm et 75 nm, ou
- une quelconque combinaison possible de ces matériaux, cette liste de matériaux ne se voulant aucunement ex-

haustive.

Le $Zr_2WP_2O_{12}$ a une dilatation thermique de -3,0 ppm/K jusqu'à 180°C.

On appelle une faujasite silicieuse un composant minéral (silicate) du système cristallin cubique, du groupe des zéolites. Les faujasites possèdent une dilatation thermique négative et isotrope de -4,2 ppm/K jusqu'à 300°C.

Le scalaire des trois axes cristallographiques pour le $Lu_2(WO_4)_3$ donne une dilatation thermique moyenne de -6.8 ppm/K jusqu'à 627°C/1.100 °C.

Comme le montrent les figures 3 et 4, le piston 2 et le cylindre interieur 7 sont séparés par un jeu 12.

Des couples de friction 3 entre le piston 2 et le cylindre intérieur 7 recouvrent totalement ou en partie le cylindre 7 et le piston 2, et engendrent entre ces deux éléments une force de frottement élevée. De tels couples sont connus de l'homme du métier et ne sont pas décrits plus en détail dans la suite de la présente description.

La figure 4 montre que le piston 2 comporte de la même façon que celui décrit dans le document FR 2 800 028 une pluralité de tronçons 4. Les tronçons 4 du piston 2 sont par exemple des cylindres ou disques multicouches de 25 mm de diamètre et d'une épaisseur de 15 à 20 mm environ. Préférentiellement, le piston actif possède trois tronçons. Des tensions de commande appliquées sur des électrodes (non représentées sur les figures 3 et 4) dont sont munis les tronçons permettent de dilater radialement ou d'allonger lesdits tronçons piézo-électriques.

La force de frottement engendrée par les couples de friction 3 permet à certains tronçons de se bloquer contre le cylindre 7 lorsqu'ils sont dilatés radialement et à d'autres de s'allonger dans le cylindre 7 en prenant appui sur un tronçon bloqué pour engendrer une force qui pourra actionner le dispositif de freinage par exemple.

Dans le mode de réalisation préféré représenté sur les figures 3 et 4, l'interface entre le cylindre intérieur 7 et le cylindre extérieur 5 présente une couche de lubrifiant solide 13.

Dans une variante de ce mode de réalisation selon l'invention, le lubrifiant solide est présent dans le/les matériau (x) du/des cylindre(s) intérieur 7 et/ou extérieur 5.

Avantageusement, ce lubrifiant solide est :

- le nitrure de bore hexagonal,
- le $MoS_2$,
- le $WSe_2$,
- le $WS_2$,
- le graphite intercalé avec des substances connues de l'homme de métier,
- le graphite non intercalé,
- le sulfure d'étain (sous ses formes $SnS$, $SnS_2$, $Sn_3S_4$), et
- le fluorure de Cerium ($CeF_3$), ou
- un quelconque mélange de ces matériaux, cette liste ne se voulant aucunement exhaustive.

Très préférentiellement, le lubrifiant solide est du fluorure de graphite $(CF_x)_n$, où x est un nombre réel qui représente le degré de fluoruration et n un nombre entier qui représente le degré de polymérisation. Le fluorure de graphite (« Fluorinated Carbon » en anglais) est également parfois appelé le polymonofluorure de carbone. Préférentiellement, le fluorure de graphite $CF_x$ où x est compris entre 0,8-1,2 (CAS: 51311-17-2), possède une structure hexagonale lamellaire. Le caractère lubrificateur intrinsèque devient maximale pour un x~1,0-1,1. Avec un angle de mouillage de $\Theta$~143°, le $CF_x$ ne mouille pas l'eau. Il ne présente aucune réaction hydrolytique avec l'eau. La stabilité thermique du CFx se situe, en fonction du degré de fluoruration x, entre des températures comprises entre 380°C et 630°C.

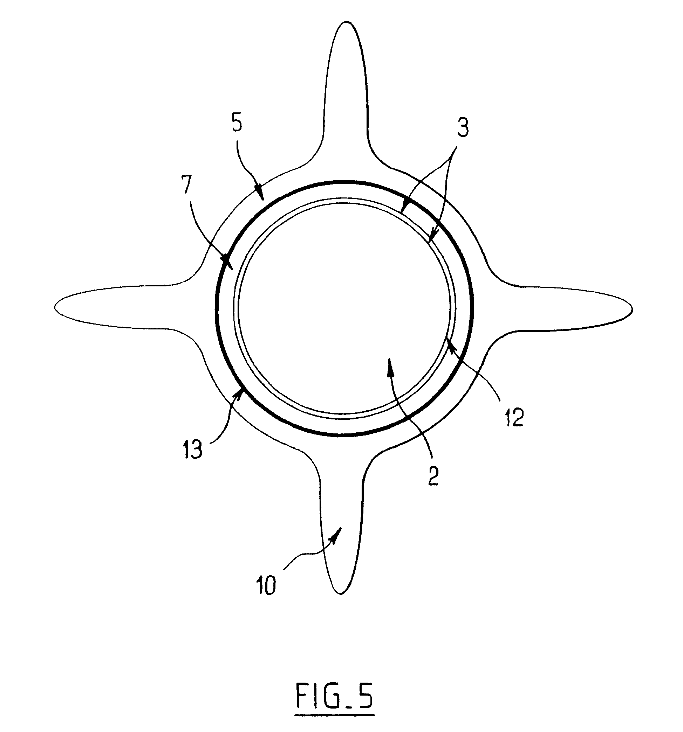

Dans le mode de réalisation préféré représenté sur les figures 3 et 4, le cylindre extérieur est de contour circulaire. Cependant, dans une variante de ce mode de réalisation, représentée sur la figure 5, le cylindre extérieur 5 peut présenter des moyens de support et de rigidité 10 matérialisés par une ou plusieurs excroissances de matière s'étendant radialement au cylindre 5. Ces excroissances 10 de matière sont préférentiellement de forme oblongue.

Le cylindre 5 améliore les performances de ténacité et de résistance à la flexion de l'ensemble cylindre intérieur 7 - cylindre extérieur 5.

On l'a dit, le cylindre intérieur 7 est monté en force dans le cylindre extérieur 5. Cette précontrainte engendre une déformation élastique du cylindre intérieur 7. Le cylindre 7 est élastiquement rétracté à température ambiante.

PRINCIPE DE FONCTIONNEMENT

Au repos ou à basse température, le piston 2 et le cylindre intérieur 7 sont séparés par un jeu 12 déterminé pour un bon fonctionnement de l'actionneur, typiquement de 2 à 3 $\mu$m.

La température de l'actionneur augmente, notamment avec la température de son environnement. Le piston actif piézo-électrique 2 se contracte alors selon son coefficient de dilatation négatif - environ égal à — 2ppm/K.

Comme le cylindre intérieur 7 présente un coefficient de dilatation thermique négatif sensiblement supérieur en valeur absolue (de l'ordre de — 8ppm/K), il se contracte également, mais de façon plus importante. Par conséquent, monté seul, il réduirait à zéro le jeu entre le piston 2 et lui- même et bloquerait l'actionneur.

Le cylindre extérieur 5 va permettre de compenser cette contraction trop importante et empêcher que le cylindre intérieur 7 ne bloque le piston actif 2.

Le cylindre intérieur 7 est élastiquement contracté par la précontrainte exercée par le cylindre extérieur 5, qui lui possède un coefficient de dilatation positif ou proche de zéro, comme l'alliage invar par exemple. Par coefficient de dilatation thermique sensiblement égal à zéro, il faut entendre un coefficient dont la valeur est inférieure, en valeur absolue, à 2ppm/K.

Lorsque le cylindre extérieur 5 se dilate lors du fonctionnement de l'actionneur, il relâche progressivement la précontrainte qu'il exerçait sur le cylindre intérieur 7. Le cylindre intérieur 7, qui d'une part se contracte du fait de son coefficient de dilatation thermique négatif, se dilate d'autre part du fait du relâchement de la précontrainte exercée par le cylindre externe 5.

Les deux effets se compensent suffisamment pour que le jeu 12 initial reste constant tout au long du fonctionnement de l'actionneur.

Un exemple numérique est donné ci-dessous.

Si on appelle $K_7$ la raideur du cylindre intérieur 7 qui définit le rapport entre la contrainte extérieure, comptée positivement du cylindre extérieur 5 au cylindre intérieur 7, et une variation $\Delta r_7$ du rayon $r_7$ du cylindre intérieur 7, on peut écrire la contrainte de compression $\sigma_7$ :

$$\sigma_7 = \sigma_0 + K_7 \, \Delta r_7$$

avec $\sigma_0$ la précontrainte pour $\Delta r = 0$.

De même, pour le cylindre extérieur 5, la contrainte de compression $\sigma_5$, comptée positivement du cylindre intérieur 7 au cylindre extérieur 5, s'écrit :

$$\sigma_5 = \sigma_0 - K_5 \, \Delta r_5$$

le signe — montre que la contrainte subie par le cylindre extérieur 5 diminue quand l'interface entre les cylindres 5 et 7 se déplace vers le cylindre intérieur 7.

En première approximation, l'interface entre les deux cylindres se déplace radialement en fonction de la température de la distance d :

$$d = \alpha_p \, \Delta \vartheta$$

avec $\alpha_p$ égal au coefficient de dilatation du matériau piézo-électrique ; et $\Delta \vartheta$ égal à la variation de température.

On a donc:

$$\Delta r_7 = (\alpha_7 - \alpha_p) \, \Delta \vartheta$$

$$\Delta r_5 = (\alpha_5 - \alpha_p) \, \Delta \vartheta$$

avec $\alpha_7$ et $\alpha_5$ les coefficients de dilatation thermique du cylindre intérieur 7 et du cylindre extérieur 5 respectivement.

Le système cylindre intérieur 7-cylindre extérieur 5 est en équilibre. Par conséquent, on a :

$$\sigma_7 = \sigma_5 \quad ,$$

ce qui donne si σ7 et σ5 restent toujours positives, c'est-à-dire que la précontrainte initiale $\sigma_0$ est suffisante°:

$$\sigma_0 + K_7 \, (\alpha_7 - \alpha_p) \, \Delta\vartheta = \sigma_0 - K_5 \, (\alpha_5 - \alpha_p) \, \Delta\vartheta.$$

On a donc la relation **E** :

$$\{E\} \qquad K_7 \, (\alpha_7 - \alpha_p) + K_5 \, (\alpha_5 - \alpha_p) = 0$$

Par ailleurs, la raideur K de l'ensemble des deux cylindres précontraints est :

$$K = K_7 + K_5$$

On cherche, dans la conception de l'actionneur, à maximiser K. En effet, le piston actif doit s'appuyer sur quelque chose de rigide pour pouvoir fonctionner correctement.

Les matériaux ayant un coefficient de dilatation positif possèdent une plus grande raideur que les matériaux à coefficients de dilatation thermique négatifs. C'est le cas notamment des matériaux dérivés de l'acier par exemple, qui possèdent une grande rigidité.

Dans l'exemple ci-dessus,

$\alpha_7$ est négatif,

$\alpha_5$ est positif, et

$K_7 \leq K_5$.

On choisira des matériaux à faibles coefficients de dilatation thermique ($\alpha_7$ et $\alpha_5$ proches de $\alpha_p$) afin de pouvoir choisir des raideurs $K_5$ et $K_7$ aussi grandes que possibles afin de rigidifier l'ensemble des deux cylindres, mais de telle sorte que la relation E soit toujours vérifiée.

On pourra ainsi avantageusement utiliser l'invar, qui possède un coefficient de dilatation thermique positif et faible (de l'ordre de 1 ppm/K), et une grande raideur puisque qu'il est de composition métallique.

Par ailleurs, la relation E ainsi que la relation :

$$\sigma = E \, \varepsilon,$$

liant le module d'Young E, la déformation élastique $\varepsilon$ et la contrainte $\sigma$ dans le matériau, permettent à l'homme de métier de déterminer la précontrainte initiale $\sigma_0$ à appliquer aux cylindres, les déformation élastiques dues aux contraintes, ainsi que les déformations dues aux changements de températures.

Dans tous les cas, les contraintes sur le matériau à coefficient de dilatation thermique négatif, qui ne devaient pas excéder 200 MPa pour que la phase du matériau soit stable dans l'actionneur de FR 2 819 468, peuvent maintenant atteindre 600 MPa environ. Le domaine d'utilisation de l'actionneur est dont élargi par rapport à l'art antérieur.

Si le matériau à coefficient de dilatation positive est à l'extérieur, la précontrainte se relâche progressivement lorsque la température augmente. Il faut donc que cette précontrainte maximale soit exercée à la température minimale (-40°C ou -60°C par exemple).

La précontrainte est maximale à -40°C ou -60°C; et à 200°C, cette précontrainte sera sensiblement nulle. C'est pourquoi le cylindre 5 peut être avantageusement monté avec une faible précontrainte à +200°C.

Grâce à la compensation de la contraction thermique du cylindre 7 par sa dilatation élastique due à la dilatation thermique du cylindre 5, la valeur du jeu 12 entre le piston actif 2 et le cylindre intérieur 7 reste donc quasiment inchangée quelle que soit la température environnante.

La dilatation du cylindre 5 et la contraction simultanée du cylindre 7 engendrent un glissement relatif des deux pièces. La présence de la couche de lubrifiant solide 13 (matériaux déjà mentionnés plus haut) à l'interface entre ces deux pièces permet de faciliter ce glissement. Cette couche de lubrifiant a une épaisseur de 0.1 $\mu$m à 5 $\mu$m, mais préférentiellement de 0.3 $\mu$m à 1 $\mu$m. La présence de cette couche permet également de faciliter le montage en force du cylindre 7 dans le cylindre 5.

Un autre mode de réalisation prévoit que ce lubrifiant 13 est contenu dans le matériau du cylindre extérieur 5 et/ou dans le matériau du cylindre intérieur 7.

Ce contrôle du jeu se fait plus simplement que dans l'art antérieur décrit dans le document FR 2 800 028, car le nombre de pièces dont il faut contrôler la dilatation est plus réduit. De plus, dans ce premier mode de réalisation préféré, les cylindres ne présentent pas de fentes de dilatation comme dans l'actionneur selon le document FR 2 800 028.

Les pièces sont moins sollicitées en contraintes car ces dernières ne s'exercent qu'à l'interface des pièces 5 et 7.

Enfin, le glissement relatif des pièces est facilité par la présence du lubrifiant solide 13, contrairement aux actionneurs décrits dans l'état de l'art.

Par conséquent, pour toutes ces raisons, la durée de vie et la sécurité de l'actionneur s'en trouvent allongées ou augmentées.

## DEUXIEME EXEMPLE DE REALISATION

### DESCRIPTION

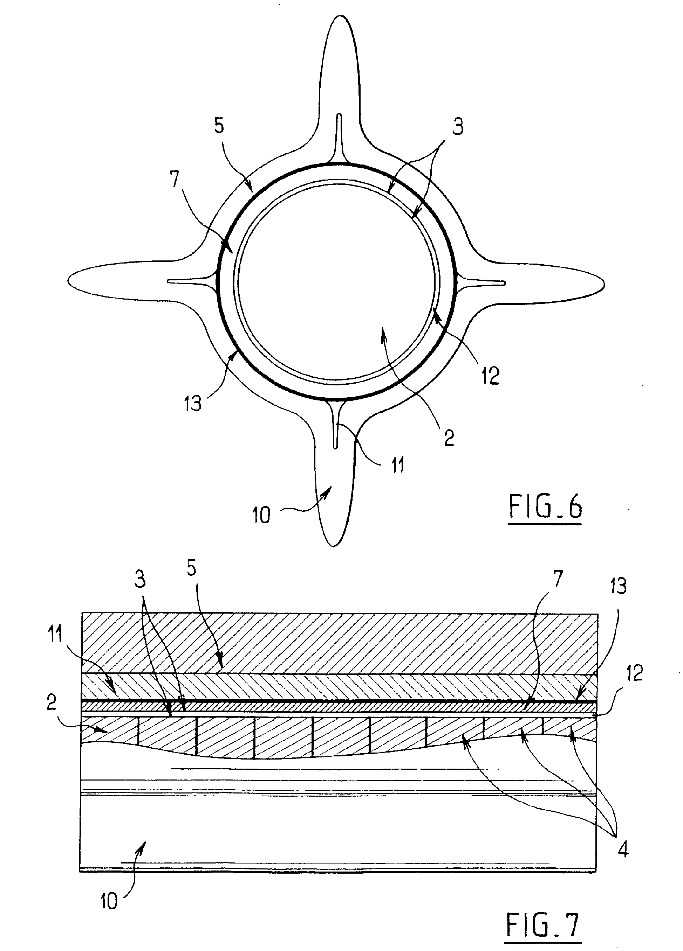

Un deuxième mode de réalisation, dont la structure est similaire à celle du premier mode de réalisation, est représenté en coupe transversale sur la figure 6 et en coupe longitudinale sur la figure 7. Les numéros des pièces sur ces figures sont similaires à ceux des figures 3, 4 et 5 pour traduire la similarité des composants du deuxième mode de réalisation.

Les matériaux du cylindre possédant le coefficient de dilatation négative sont les même que pour le premier mode de réalisation, et le lubrifiant solide est également le même que pour le premier mode de réalisation.

Sur les figures 6 et 7, le cylindre 5 présente des moyens de support et de rigidité 10 matérialisés par une ou plusieurs excroissances de matière s'étendant radialement au cylindre 5. Cependant, on pourrait tout à fait considérer un cylindre 5 de contour circulaire dans les développements qui suivent et rester dans un actionneur selon l'invention.

Dans ce deuxième mode de réalisation, le cylindre 5 présente une ou plusieurs fentes de dilatation 11. Ces fentes 11 sont radiales et s'étendent à partir de génératrices du cylindre intérieur 7. Chaque fente 11 s'étend dans les directions radiale et longitudinale, dans les parties de faible épaisseur du cylindre 5 et/ou préférentiellement dans les excroissances 10. L'extension longitudinale s'effectue préférentiellement sur la longueur du cylindre.

### PRINCIPE DE FONCTIONNEMENT

Le principe de fonctionnement de ce deuxième mode de réalisation est similaire à celui du premier mode de réalisation décrit précédemment. Ce deuxième mode de réalisation sera préféré dans le cas où le cylindre extérieur 5 est construit en un matériau qui présente des déformations élastiques faibles. Les fentes 11 vont donc augmenter les possibilités d'élongation du cylindre 5.

Il faut cependant noter que ce deuxième mode de réalisation sera préféré uniquement en cas de problèmes d'élongation du cylindre 5 car les fentes 11 diminuent la raideur K du système cylindre intérieur 7 - cylindre extérieur 5.

Lors du fonctionnement de l'actionneur ou de la montée en température, le cylindre extérieur 5, ayant un coefficient de dilatation thermique positif, va se dilater. En même temps qu'il a tendance à se dilater radialement pour compenser la contraction du cylindre 7 comme dans le premier mode de réalisation, il se dilate circonférentiellement et resserre les fentes 11 de dilatation, ce qui a pour effet de limiter sa dilatation radiale.

## TROISIEME EXEMPLE DE REALISATION

### DESCRIPTION

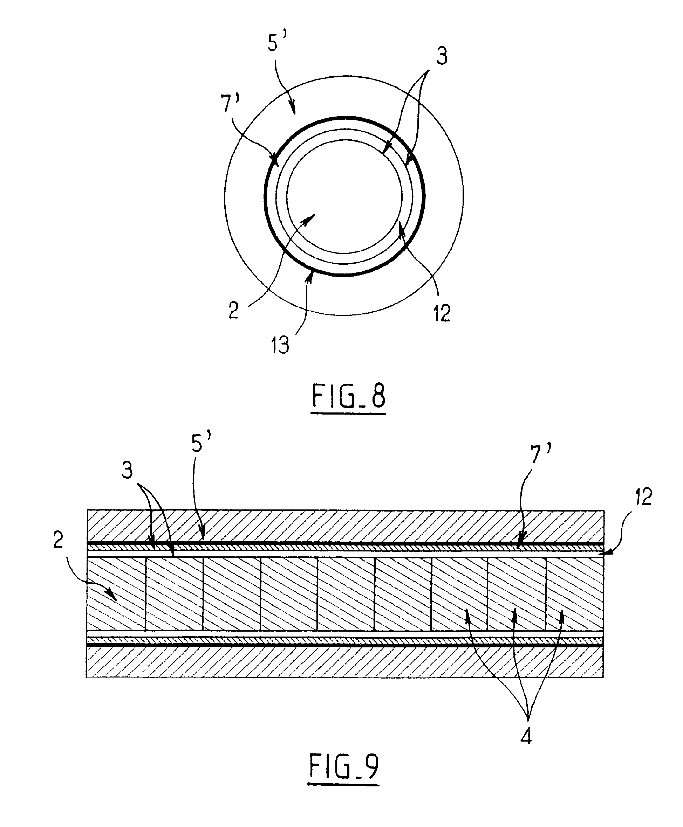

Le troisième mode de réalisation, représenté sur les figures 8 et 9, possède la même structure que le premier mode de réalisation des figures 3 et 4 et une numérotation similaire des composants reflète cette similarité.

La grande différence est que le cylindre extérieur 5' est en un matériau possédant un coefficient de dilatation thermique négatif, et que le cylindre intérieur 7' possède un coefficient de dilatation thermique positif ou proche de zéro (inférieur à 2 ppm/K en valeur absolue par exemple).

Cependant, les matériaux du cylindre possédant le coefficient de dilatation négative sont les mêmes que pour le premier mode de réalisation, et le lubrifiant solide est également le même que pour le premier mode de réalisation.

Le piston actif en matériau piézo-électrique 2 et le cylindre intérieur 7 sont séparés par un jeu 12. Les couples de friction 3, connus de l'homme du métier, recouvrent totalement ou en partie le cylindre 7 et le piston 2 et engendrent entre ces deux éléments une force de frottement élevée.

La figure 9 montre que le piston 2 comporte de la même façon que dans le document FR 2 800 028 une pluralité de tronçons 4. Les tronçons 4 du piston 2 sont de même des cylindres ou disques multicouches de 25 mm diamètre et d'une épaisseur de 15 à 20 mm.

Une couche de lubrifiant solide est présente à l'interface entre le cylindre externe 5' et le cylindre intérieur 7'.

Dans un autre mode de réalisation, ce lubrifiant solide pourra être inclus dans le/les matériau(x) des cylindres 5' et/ou 7'.

Dans ce mode de réalisation, on définit une relation E' par :

$$\{E'\} \qquad K_{7'} (\alpha_{7'} - \alpha_p) + K_{5'} (\alpha_{5'} - \alpha_p) = 0$$

avec $\alpha_{7'}$, $\alpha_{5'}$ et K7', K5' les coefficients de dilatation thermique et les raideurs du cylindre intérieur 7' et du cylindre extérieur 5' respectivement.

On alors dans ce cas :

$\alpha_{7'}$ est positif,
$\alpha_{5'}$ est négatif, et
$K_{7'} \geq K_{5'}$.

PRINCIPE DE FONCTIONNEMENT

A basse température, le piston 2 et le cylindre 5' sont séparés par le jeu 12. Au fur et à mesure du fonctionnement de l'actionneur et lorsque la température environnante ou des pièces environnantes augmente, le piston 2 se contracte. Simultanément, le cylindre intérieur 7' a tendance à se dilater. La valeur du jeu 12 a donc tendance à augmenter.

Comme dans les modes de réalisation précédents, le cylindre extérieur 5' va compenser cet effet pour maintenir la valeur du jeu 12 quasi constante et assurer un bon fonctionnement de l'actionneur.

Le cylindre extérieur 5' possède un coefficient de dilatation thermique négatif. Par conséquent, il va se contracter et empêcher le cylindre 7' de se dilater. Comme le cylindre 7' ne se dilate plus, le jeu 12 reste constant.

La contrainte à l'interface entre le cylindre 5' et le cylindre 7' augmente au fur et à mesure que le cylindre intérieur 7' essaie de se dilater et que le cylindre externe 5' l'en empêche en se contractant.

Ce mode de réalisation sera mis en oeuvre avec des cylindres de matériaux à coefficient de dilatation négatif qui supportent des tensions élevées s'exerçant sur leur diamètre interne. Ce n'est pas le cas de tous les matériaux à coefficient de dilatation négatif. Dans le cas où le matériau à coefficient de dilatation négatif présente une résistance à ces tensions trop faible, les premier et deuxième modes de réalisation seront préférés.

Dans tous les cas, les contraintes sur le matériau à coefficient de dilatation thermique négatif, qui ne devaient pas excéder 200 MPa pour que la phase du matériau soit stable dans l'actionneur de FR 2 819 468, peuvent maintenant atteindre 600 MPa environ. Le domaine d'utilisation de l'actionneur est dont élargi par rapport à l'art antérieur.

En outre, de même que pour les modes de réalisation précédents, l'homme de métier peut concevoir des variantes à ce mode de réalisation préféré sans quitter le champ de l'invention.

Ces variantes sont par exemple la présence de moyens de support et de rigidité sous la forme d'excroissances externes sur le cylindre externe 5'. La présence de fentes de dilatation dans le cylindre intérieur 7' ou de rétractations dans le cylindre 5' ainsi que le dimensionnement de leur profondeur, permettent de résoudre les problèmes d'élongation insuffisante que présenterait le troisième mode de réalisation des figures 8 et 9.

Le terme cylindre utilisé dans tous les développements qui précèdent doit être entendu au sens large. Il désigne de façon générale toute forme définie par un ensemble de génératrices parallèles s'appuyant sur une même surface fermée.

Les actionneurs qui viennent d'être décrits sont avantageusement utilisés pour équiper des étriers de frein, et plus particulièrement des étriers de frein d'avions ou d'automobiles, les systèmes d'embrayage ou les actionneurs de surfaces de contrôle.

**Revendications**

1. Actionneur comportant un cylindre intérieur de coulissement (7, 7') et un cylindre (5, 5') extérieur dans lequel ledit cylindre de coulissement (7, 7') est précontraint, l'un ou l'autre du cylindre extérieur (5, 5') et du cylindre de coulissement (7, 7') étant en matériau ayant un coefficient de dilatation thermique négatif ou sensiblement nul, l'autre cylindre ayant un coefficient de dilatation thermique positif ou sensiblement nul, l'actionneur comportant en outre un piston linéaire (2) en matériau actif comportant une pluralité de tronçons (4) aptes à être commandés pour être dilatés de façon à se bloquer dans le cylindre (7, 7') de coulissement et/ou pour être allongés à l'intérieur du cylindre (7, 7') de coulissement de façon à ce que le piston (2) se déplace en frottement à sec axialement dans le cylindre de coulissement (7, 7'), **caractérisé en ce que** le matériau du cylindre ayant un coefficient de dilatation thermique négatif ou sensiblement nul est un des matériaux suivants :

- le $Zr_2WP_2O_{12}$,
- une faujasite silicieuse,

- le $Lu_2(WO_4)_3$,
- le $ZrW_2O_8$ en phase cubique comportant des nanograins dont la taille est sensiblement comprise entre 10 nm et 75 nm, ou
- une quelconque combinaison possible de ces matériaux, de sorte que les contraintes sur ledit matériau puissent atteindre 600 MPa environ.

2. Actionneur selon la revendication 1, **caractérisé en ce que** le cylindre en un matériau à coefficient de dilatation thermique négatif ou sensiblement nul est le cylindre de coulissement (7, 7'), le cylindre extérieur (5, 5') étant en un matériau à coefficient de dilatation positif.

3. Actionneur selon la revendication 1, **caractérisé en ce que** le cylindre en un matériau à coefficient de dilatation thermique négatif ou sensiblement nul est le cylindre extérieur (5, 5'), le cylindre de coulissement (7, 7') étant en un matériau à coefficient de dilatation positif.

4. Actionneur selon l'une des revendications précédentes, **caractérisé en ce qu'**il comporte au moins une couche de lubrifiant solide (13) à l'interface entre le cylindre extérieur (5, 5') et le cylindre de coulissement (7, 7').

5. Actionneur selon la revendication précédente, **caractérisé en ce que** le lubrifiant solide est du fluorure de graphite $(CF_x)_n$, où x est un nombre réel qui représente le degré de fluoruration et n un nombre entier qui représente le degré de polymérisation.

6. Actionneur selon la revendication précédente, **caractérisé en ce que** x est compris entre 0,8-1,2, préférentiellement compris entre 1.0 et 1.1.

7. Actionneur selon la revendication 4, **caractérisé en ce que** le lubrifiant solide est :

   - le nitrure de bore hexagonal,
   - le $MoS_2$,
   - le $WSe_2$,
   - le $WS_2$,
   - le graphite intercalé ou non intercalé,
   - le sulfure d'étain (sous ses formes SnS, $SnS_2$, $Sn_3S_4$), et
   - le fluorure de Cerium ($CeF_3$), ou
   - un quelconque mélange de ces matériaux.

8. Actionneur selon l'une des revendications précédentes, **caractérisé en ce que** le cylindre extérieur (5, 5') comporte des excroissances externes (10) s'étendant radialement audit cylindre (5, 5').

9. Actionneur selon l'une des revendications précédentes, **caractérisé en ce que** l'un des deux cylindres (5, 5'/7, 7') comporte une ou plusieurs fentes (11), s'étendant radialement et longitudinalement dans le cylindre.

10. Actionneur selon les revendications précédentes, **caractérisé en ce que** les tronçons (4) successifs sont en matériau actif piézo-électrique et sont aptes à être déformés indépendamment les uns des autres par des moyens de commande pour se raccourcir sur eux-mêmes de façon à se bloquer par rapport au cylindre de coulissement (7, 7') ou pour s'allonger de façon à se libérer par rapport à celui-ci.

**Claims**

1. An actuator comprising an inner sliding cylinder (7, 7') and an outer cylinder (5, 5'), in which said sliding cylinder (7, 7') is pre-stressed, either the outer cylinder (5, 5') or the sliding cylinder (7, 7') being made of a material having a thermal expansion coefficient that is negative or substantially zero, the other cylinder having a thermal expansion coefficient that is positive or substantially zero, the actuator further comprising a linear piston (2) of an active material comprising a plurality of sections (4) capable of being controlled to be expanded so as to jam inside the sliding cylinder (7, 7') and/or to be lengthened within the sliding cylinder (7, 7') so that the piston (2) moves by dry friction axially inside the sliding cylinder (7, 7'), **characterized in that** the material of the cylinder having a thermal expansion coefficient that is negative or substantially zero is one of the following materials:

- $Zr_2WP_2O_{12}$ ,
- silicon faujasite,
- $Lu_2 (WO_4)_3$ ,
- $ZrW_2O_8$ in cubic phase comprising nanograins the dimension of which is substantially within 10 nm and 75 nm, or
- any possible combination of these materials,

so that stresses on said material can reach about 600 MPa.

2. The actuator according to claim 1, **characterized in that** the cylinder of a material having a thermal expansion coefficient that is negative or substantially zero is the sliding cylinder (7, 7'), the outer cylinder (5, 5') being made of a material having a positive expansion coefficient.

3. The actuator according to claim 1, **characterized in that** the cylinder of material having a thermal expansion coefficient that is negative or substantially zero is the outer cylinder (5, 5'), the sliding cylinder (7, 7') being made of a material having a positive expansion coefficient.

4. The actuator according to any of the preceding claims, **characterized in that** it comprises at least one solid lubricant (13) layer at the interface between the outer cylinder (5, 5') and the sliding cylinder (7, 7').

5. The actuator according to the preceding claim, **characterized in that** the solid lubricant is graphite fluoride $(CF_x)_n$, where x is a real number representing the degree of fluoridation and n is an integer representing the degree of polymerization.

6. The actuator according to the preceding claim, **characterized in that** x is between 0.8 and 1.2, preferably between 1.0 and 1.1.

7. The actuator according to claim 4, **characterized in that** the solid lubricant is:

- hexagonal boron nitride,
- $MoS_2$ ,
- $WSe_2$,
- $WS_2$,
- interleaved or non interleaved graphite,
- tin sulfide (as Sns, $SnS_2$, $Sn_3S_4$) , and
- cerium fluoride $(CeF_3)$ , or
- any mixture of these materials.

8. The actuator according to any of the preceding claims, **characterized in that** the outer cylinder (5, 5') comprises external outgrowths (10) extending radially to said cylinder (5, 5').

9. The actuator according to any of the preceding claims, **characterized in that** one of both cylinders (5, 5'/ 7, 7') comprises one or more slots (11), extending radially and longitudinally in the cylinder.

10. The actuator according to any of the preceding claims, **characterized in that** the successive sections (4) are made of a piezoelectric active material and are capable of being deformed independently of each other by control means in order to shorten so as to jam with respect to the sliding cylinder (7, 7') or lengthen so as to disengage therefrom.


**Patentansprüche**

1. Stellglied, umfassend einen inneren Gleitzylinder (7, 7') und einen äußeren Zylinder (5, 5'), in dem der Gleitzylinder (7, 7') vorbelastet ist, wobei entweder der eine oder der andere des Außenzylinders (5, 5') und des Gleitzylinders (7, 7') aus einem Material besteht, das einen Wärmeausdehnungskoeffizienten hat, der negativ oder im Wesentlichen gleich Null ist, wobei der andere Zylinder einen Wärmeausdehnungskoeffizienten hat, der positiv oder im Wesentlichen gleich Null ist, wobei das Stellglied ferner einen linearen Kolben (2) aus aktivem Material umfasst, der eine Vielzahl von Teilstücken (4) umfasst, die dazu geeignet sind, um gesteuert zu werden, um ausgedehnt zu werden, so dass sie sich innerhalb des Gleitzylinders (7, 7') verklemmen, und/oder um innerhalb des Gleitzylinders (7, 7') verlängert zu werden, so dass sich der Kolben (2) mit Trockenreibung axial im Gleitzylinder (7, 7') bewegt, **dadurch**

**gekennzeichnet, dass** das Material des Zylinders, das einen Wärmeausdehnungskoeffizienten hat, der negativ oder im Wesentlichen gleich Null ist, eines der folgenden Materialien ist:

- $Zr_2WP_2O_{12}$,
- Silizium-Faujasit,
- $Lu_2(WO_4)_3$,
- $ZrW_2O_8$ mit kubischer Phase, das Nanokörner umfasst, deren Größe im Wesentlichen zwischen 10 nm und 75 nm liegt, oder
- eine beliebige mögliche Kombination dieser Materialien,

so dass die Belastungen des Materials ungefähr 600 MPa erreichen können.

2. Stellglied nach Anspruch 1, **dadurch gekennzeichnet, dass** der Zylinder aus einem Material, das einen Wärmeausdehnungskoeffizienten hat, der negativ oder im Wesentlichen gleich Null ist, der Gleitzylinder (7, 7') ist, wobei der Außenzylinder (5, 5') aus einem Material mit positivem Ausdehnungskoeffizienten besteht.

3. Stellglied nach Anspruch 1, **dadurch gekennzeichnet, dass** der Zylinder aus einem Material, das einen Wärmeausdehnungskoeffizienten hat, der negativ oder im Wesentlichen gleich Null ist, der Außenzylinder (5, 5') ist, wobei der Gleitzylinder (7, 7') aus einem Material mit positivem Ausdehnungskoeffizienten besteht.

4. Stellglied nach einem der vorhergehenden Ansprüche, **dadurch gekennzeichnet, dass** es mindestens eine Schicht aus Festschmierstoff (13) an der Schnittstelle zwischen dem Außenzylinder (5, 5') und dem Gleitzylinder (7, 7') umfasst.

5. Stellglied nach dem vorhergehenden Anspruch, **dadurch gekennzeichnet, dass** der Festschmierstoff Graphitfluor $(CF_x)_n$ ist, wobei x eine reelle Zahl ist, die das Ausmaß der Fluorisierung darstellt, und n eine ganze Zahl ist, die das Ausmaß der Polymerisation darstellt.

6. Stellglied nach dem vorhergehenden Anspruch, **dadurch gekennzeichnet, dass** x zwischen 0,8 und 1,2, bevorzugt zwischen 1,0 und 1,1 liegt.

7. Stellglied nach Anspruch 4, **dadurch gekennzeichnet, dass** der Festschmierstoff:

- hexagonales Bornitrid,
- $MoS_2$,
- $WSe_2$,
- Was2,
- eingelagertes oder nicht eingelagertes Graphit,
- Zinnsulfid (in seinen Formen Sns, $SnS_2$, $Sn_3S_4$) und
- Zerfluorid ($CeF_3$) , oder
- eine beliebige Mischung dieser Materialien ist.

8. Stellglied nach einem der vorhergehenden Ansprüche, **dadurch gekennzeichnet, dass** der Außenzylinder (5, 5') Ausstülpungen (10) umfasst, die sich radial bis zum Zylinder (5, 5') erstrecken.

9. Stellglied nach einem der vorhergehenden Ansprüche, **dadurch gekennzeichnet, dass** einer der beiden Zylinder (5, 5'/ 7, 7') einen oder mehrere Schlitze (11) umfasst, die sich radial und in Längsrichtung im Zylinder erstrecken.

10. Stellglied nach einem der vorhergehenden Ansprüche, **dadurch gekennzeichnet, dass** die aufeinander folgenden Teilstücke (4) aus einem piezoelektrischen aktiven Material bestehen und dazu geeignet sind, um durch Steuermittel unabhängig voneinander verformt zu werden, um sich in sich selber zu verkürzen, so dass sie sich gegenüber dem Gleitzylinder (7, 7') verklemmen, oder um sich zu verlängern, so dass sie sich davon lösen.

3

4

2

8

5  6  7

1

<u>FIG.1</u>

3

2

7  6  5

8

1

<u>FIG.2</u>

FIG.3

FIG.4

FIG.5

FIG.6

FIG.7

FIG. 8

FIG. 9

**EP 1 729 352 B1**

**Documents brevets cités dans la description**

- FR 2800028
- FR 2819468
- US 5514360 A
- US 5919720 A